**Europäisches Patentamt**

**European Patent Office**

**Office européen des brevets**

(11) Publication number: **0 166 702**
**B1**

# EUROPEAN PATENT SPECIFICATION

(45) Date of publication of patent specification: **20.12.89**

(51) Int. Cl.⁴: **B 60 G 11/26,** B 60 G 17/04

(21) Application number: **85830157.5**

(22) Date of filing: **25.06.85**

(54) Variable-stiffnes air spring, particularly for motor vehicle suspensions.

(30) Priority: **27.06.84 IT 6765884**

(43) Date of publication of application:
**02.01.86 Bulletin 86/01**

(45) Publication of the grant of the patent:
**20.12.89 Bulletin 89/51**

(84) Designated Contracting States:
**DE FR GB**

(56) References cited:
**EP-A-0 089 794**
**DE-A-2 406 835**
**FR-A-1 339 321**
**FR-A-1 377 961**

**PATENTS ABSTRACTS OF JAPAN, vol. 8, no.
224 (M-331)1661r, 13th October 1984; & JP-A-59
106 308 (ISUZU JIDOSHA K.K.) 20-6-1984**

(73) Proprietor: **FIAT AUTO S.p.A.**
**Corso Giovanni Agnelli 200**
**I-10135 Torino (IT)**

(72) Inventor: **Trebbi, Giorgio**
**Via Verdina 8**
**I-10025 Pino Torinese (Torino) (IT)**
Inventor: **Di Giusto, Nevio**
**Via Guarini 48**
**I-10078 Venaria (Torino) (IT)**
Inventor: **Visconti, Amedeo**
**Via Panizza 3**
**I-10137 Torino (IT)**
Inventor: **Mannina, Antonino**
**Via Rigola 6**
**I-10135 Torino (IT)**

(74) Representative: **Quinterno, Giuseppe et al**
**c/o Jacobacci-Casetta & Perani S.p.A. Via Alfieri,
17**
**I-10121 Torino (IT)**

Courier Press, Leamington Spa, England.

# Description

The present invention relates to an air spring, particularly for vehicle suspensions, of the type defined in the preamble of the appended Claim 1.

An air spring of this kind is disclosed in FR—A—1 339 321. That known air spring includes a single auxiliary chamber, which is external to the main variable volume chamber.

The object of the present invention is to provide an improved air spring of the aforesaid type, which has a simple and robust structure and has a stiffness that is more gradually variable.

This object is achieved according to the invention by an air spring of the type specified above, the features of which are defined in the characterizing portion of the appended Claim 1.

Further characteristics and advantages of the air spring according to the invention will become apparent from the detailed description which follows with reference to the appended drawings provided purely by way of non-limiting example, in which:

Figure 1 is a perspective view of an air spring.

Figure 2 is a sectional view taken along the line II-II of Figure 1, showing an embodiment of the prior art.

Figures 3 and 4 are partially-sectioned views of two embodiments according to the invention of the spring shown in Figure 1, and

Figure 5 is a sectional view of a variant of the valve for a spring according to the invention.

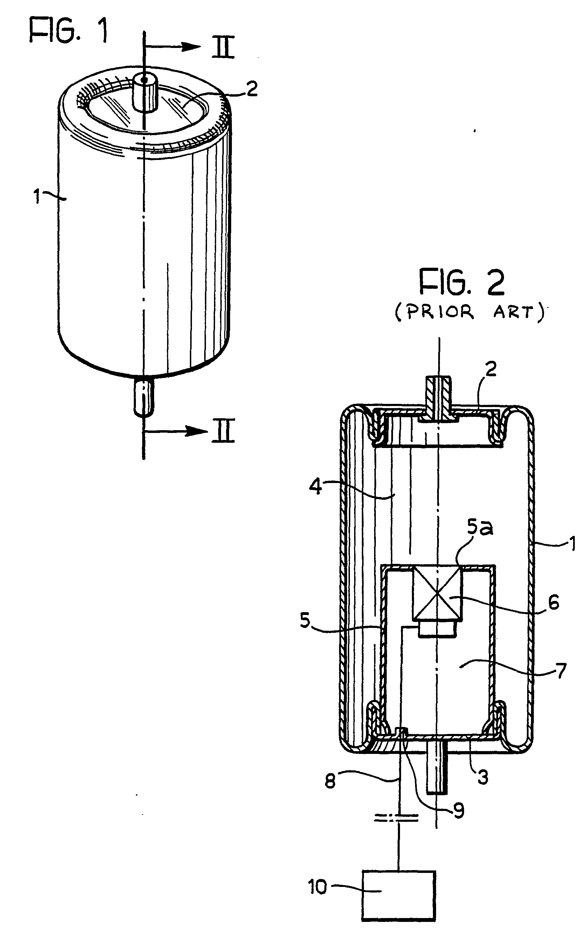

Figure 1 shows an air spring comprising a flexible tubular casing 1, for example of rubberized canvas, with rigid caps 2, 3 connected to its ends in known manner.

The casing 1 and the caps 2, 3 define in their entirety an air-filled chamber 4 of variable volume.

Referring to Figure 2, a rigid body 5 in the form of an inverted beaker is welded to the lower cap 3 within the chamber 4. The axial dimension of this rigid body 5 is considerably less than the distance between the caps 2, 3.

The lower cap 3 and the wall of the body 5 define in their entirety an auxiliary chamber 7 of fixed volume.

The wall of the rigid body 5 facing the upper cap 2 has an opening 5a within which is fixed a known type of solenoid valve 6 which controls the communication between the chambers 4 and 7. The solenoid valve 6 is controlled through a connection cable 8 which emerges from the air spring, for example through a sealing connector 9 fixed in a corresponding ready-made hole in the lower cap 3.

The solenoid valve 6 is normally kept in a state in which it allows communication between the chambers 4 and 7. In this condition, the volume of compressible air consists in practice of all the air in the casing 1 and thus includes the volume of air within the chamber 7.

The spring described above can be used for vehicle suspensions. In this application, when the vehicle meets a bend at high speed, the solenoid valve is closed in order to limit rolling. In this condition, only the volume of air outside the rigid casing 5 is "working" and the stiffness of the air spring is increased.

The solenoid valve 6, which can be of the on-off type or the variable-throughput type, is appropriately piloted by a sensor 10, for example a sensor of the transverse acceleration of the vehicle, an inertial sensor, or some other.

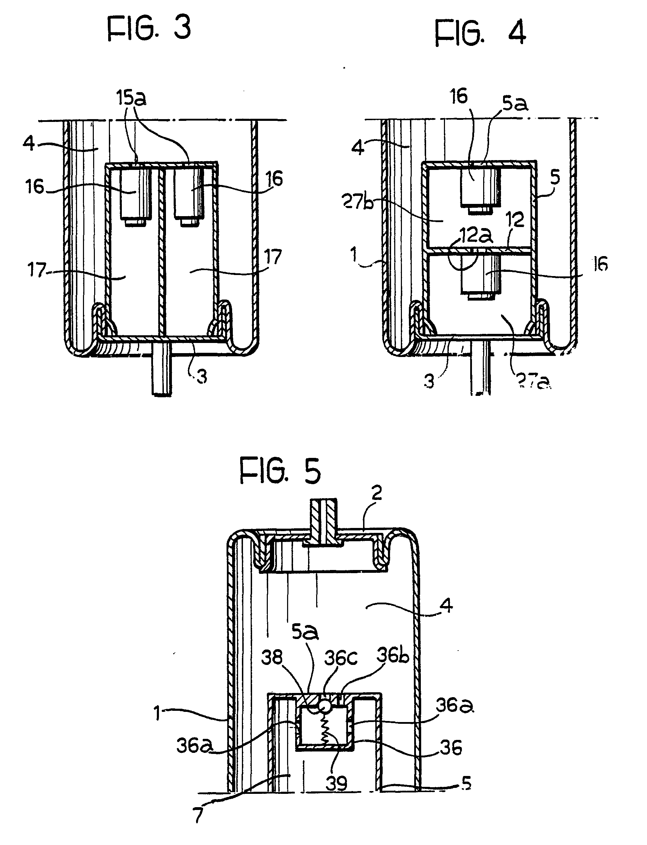

Figures 3 and 4 show two embodiments according to the invention in each of which is provided a plurality of auxiliary chambers, indicated 17 in Figure 3 and 27a and 27b in Figure 4.

In the embodiment illustrated in Figure 3, the region within the rigid body 5 is divided into two chambers 17 which do not communicate with one another but communicate with the variable-volume chamber 4 through respective openings 15a controlled by respective solenoid valves 16. In this variant, it is possible to achieve progressive stiffening of the air spring by the successive closure of the two solenoid valves 16. It is therefore possible to achieve a progressive stiffening with the use of very simple and cheap solenoid valves of the on-off type.

In the embodiment shown in Figure 4, the region within the rigid body 5 is divided into two chambers 27a and 27b by an internal transverse partition 12 with an opening 12a.

The lower chamber 27a can be put into communication with the upper chamber 27b through an opening 12a in the partition 12, controlled by a solenoid valve 16. The upper chamber 27b communicates in its turn with the variable-volume chamber 4 through the opening 5a in the rigid body 5, which is also controlled by a solenoid valve 16. In this variant, the progressive stiffening of the air spring can be achieved firstly by the closure of the solenoid valve associated with the opening 12a and then by the subsequent closure of the solenoid valve associated with the opening 5a.

In the case of the embodiments shown in Figures 3 and 4 also, the solenoid valves can be piloted by the sensors able to detect, for example, the transverse acceleration of a motor vehicle.

Figure 5 illustrates a variant of the valve employed on a spring according to the invention, which can also act as a damper and has a stiffness in compression stages different from the stiffness in extension stages. In this drawing, the parts already described above with reference to the other variants have been given the same reference numerals.

In the variant of Figure 5, the rigid body 5 has a central opening 5a at its upper end, to the edge of which a hollow rigid body 36 is sealingly connected. This hollow body has, for example, a cylindrical shape and has through-holes 36a in its side wall which put the interior of the hollow body into communication with the region or chamber 7 defined by the casing 5 and the lower cap 3. The wall of the hollow body 36 facing the upper cap 2 has a pair of holes 36b, 36c the second of which has a larger diameter.

A ball 38 biassed by a spring 39 into engagement with the lower edge of the hole 36c is located within the hollow body 36. The ball 39 acts as a shutter while the lower edge of the hole 36c acts as a valve seat. The spring 39 reacts at its lower end against the lower wall of the hollow body 36.

The variable-volume chamber 4 is in permanent communication with the fixed-volume chamber 7 through the holes 36b and 36a of the hollow body 36.

When the spring is compressed during use, the increase of air pressure in the variable-volume chamber 4 pushes the ball 38 downwards against the action of the biassing spring 39 and opens the hole 36c. In this manner, the resistance to the flow of air from the chamber 4 to the chamber 7 will be reduced considerably.

When the air spring extends again, the spring 39 urges the ball 38 back into engagement with the hole 36c, and the flow cross-section of the communication between the chambers 7 and 4 is reduced to the section of the one hole 36b. The resistance to the drawing of air from the chamber 7 to the chamber 4 will therefore be greater than for the drawing under compression.

Preferably, the cross-section of the hole 36b is much smaller than the hole 36c.

By the appropriate selection of the diameters of the holes 36b and 36c, as well as the stiffness of the biassing spring 39, it is possible to produce air springs with stiffnesses and damping characteristics which are different under compression and extension over a wide range of values.

The air spring described above can also be used as a damper.

## Claims

1. Air spring, particularly for motor vehicle suspensions, comprising a flexible tubular casing (1) to the ends of which are connected rigid caps (2, 3) defining therewith a main air chamber (4) of variable volume, which is associated with an auxiliary chamber (7; 17; 27a, 27b) which has an opening (5a, 15a) for communication with the main chamber (4) and which defines a supplementary volume, valve means (16) being provided for controlling the communication between the said main and auxiliary chambers (4; 7, 17, 27a, 27b), characterized in that within the main chamber (4) there is formed a plurality of auxiliary chambers (27a, 27b) which communicate with each other through openings (12a) controlled by respective valve means (16) so as to define a plurality of supplementary volumes addable to that of said main chamber (4).

2. Variable-stiffness air spring according to Claim 1, characterized in that the auxiliary chambers (27a, 27b) are adjacent one of the end caps (2, 3).

3. Variable-stiffness air spring according to Claim 2, characterized in that the auxiliary chambers (27a, 27b) are constituted by rigid casings (5) connected to one of the end caps (3).

4. Variable-stiffness air spring according to any one of the preceding claims, characterized in that the valve means comprise at least one solenoid valve (16).

5. Variable stiffness air spring according to Claim 4, characterized in that the said at least one solenoid valve (16) is of the on-off type.

6. Variable-stiffness air spring according to Claim 4, characterized in that the said at least one solenoid valve (16) is of the variable-throughput type.

7. Variable-stiffness air spring according to any one of the preceding claims, characterized in that the valve means are controlled in dependence on signals output by means (10) for sensing the transverse acceleration of the vehicle.

8. Variable-stiffness air spring according to any one of the preceding Claims, characterized in that it further includes further valve means (38, 29) for automatically varying the section of the communication passage (36b, 36c, 36a) between one auxiliary chamber (7) and the main chamber (4) in such a way that the section of the passage is automatically increased when the air spring is compressed and reduced when the air spring is extended.

9. Variable-stiffness air spring according to Claim 8, charcterized in that the said communication passage comprises a first hole (36b) which is permanently open and a second hole (36c) with which the further valve means (38, 39) are associated.

10. Variable-stiffness air spring according to Claim 9, characterized in that the first hole (36b) has a smaller diameter than the second hole (36c).

11. Variable-stiffness air spring according to Claim 9 or 10, characterized in that the said further valve means comprise a shutter valve (38) movable under the action of a spring (39).

## Patentansprüche

1. Luftfeder, insbesondere für Kraftfahrzeug-Aufhängungen,
mit einem flexiblen rohrförmigen Gehäuse (1), an dessen Stirnseiten starre Kappen (2, 3) angebracht sind, die mit dem Gehäuse eine Hauptluftkammer (4) mit variablem Volumen begrenzen, die mit einer Hilfskammer (7; 17; 27a, 27b) verbunden ist, wobei die Hilfskammer eine Öffnung (5a; 15a) für die Verbindung mit der Haupfluftkammer (4) aufweist und ein Zusatzvolumen begrenzt,
sowie mit Ventilmitteln (16), die die Verbindung zwischen der Hauptluftkammer (4) und den Hilfskammern (7; 17; 27a, 27b) steuern,
dadurch gekennzeichnet,
daß innerhalb der Hauptluftkammer (4) eine Mehrzahl von Hilfskammern (27a, 27b) ausgebildet sind, die über durch entsprechende Ventilmittel (16) gesteuerte Öffnungen (12a) so miteinander in Verbindung stehen, daß sie mehrere Zusatzvolumina begrenzen, die zu dem Volumen der Hauptluftkammer (4) hinzufügbar sind.

2. Luftfeder mit variabler Steifigkeit nach Anspruch 1, dadurch gekennzeichnet, daß die Hilfskammern (27a, 27b) in der Nähe einer der stirnseitigen Kappen (2; 3) angeordnet sind.

3. Luftfeder mit variabler Steifigkeit nach Anspruch 2, dadurch gekennzeichnet, daß die Hilfskammern (27a, 27b) von starren Gehäusen (5) gebildet sind, die mit einer der stirnseitigen Kappen (3) verbunden sind.

4. Luftfeder mit variabler Steifigkeit nach einer der vorhergehenden Ansprüche, dadurch gekennzeichnet, daß die Ventilimittel wenigstens ein Magnetventil (10) umfassen.

5. Luftfeder mit variabler Steifigkeit nach Anspruch 4, dadurch gekennzeichnet, daß das wenigstens eine Magnetventil (16) ein Ein-Aus-Ventil ist.

6. Luftfeder mit variabler Steifigkeit nach Anspruch 4, dadurch gekennzeichnet, daß das wenigstens eine Magnetventil (16) ein Ventil mit variablem Durchsatz ist.

7. Luftfeder mit variabler Steifigkeit nach einer der vorhergehenden Ansprüche, dadurch gekennzeichnet, daß die Ventilmittel in Abhängigkeit von Signalen gesteuert werden, die von Mitteln (10) zur Erfassung der Querbeschleunigung des Fahrzeugs ausgegeben werden.

8. Luftfeder mit variabler Steifigkeit nach einer der vorhergehenden Ansprüche, dadurch gekennzeichnet, daß ferner Ventilmittel (38, 39) vorgesehen sind, mit denen der Querschnitt der Verbindungsdurchgangs (36b, 36c, 36a) zwischen einer Hilfskammer (7) und der Hauptluftkammer (4) so veränderbar ist, daß der Durchgangsquerschnitt bei Kompression der Luftfeder automatisch vergrößert und bei Expandierung der Luftfeder automatisch verkleinert wird.

9. Luftfeder mit variabler Steifigkeit nach Anspruch 8, dadurch gekennzeichnet, daß der Verbindungsdurchgang eine erste Öffnung (36b) aufweist, die permanent offen ist, und eine zweite Öffnung (36c), der die weiteren Ventilmittel (38, 39) zugeordnet sind.

10. Luftfeder mit variabler Steifigkeit nach Anspruch 9, dadurch gekennzeichnet, daß die erste Öffnung (36b) einen kleineren Durchmesser hat als die zweite Öffnung (36c).

11. Luftfeder mit variabler Steifigkeit nach Anspruch 9 oder 10, dadurch gekennzeichnet, daß die weiteren Ventilmittel ein unter der Wirkung einer Feder (39) bewegbares Schließventil (38) umfassen.

**Revendications**

1. Ressort pneumatique, en particulier pour suspensions de véhicules automobiles, comprenant une enveloppe tubulaire flexible (1) aux extrémités de laquelle sont fixés des fonds rigides (2, 3) qui définissent avec cette enveloppe une chambre à air principale (4) à volume variable qui est associée à une chambre auxiliaire (7; 17; 27a, 27b), laquelle possède une ouverture (5a; 15a) servant à établir la communiction avec la chambre principale (4) et définit un volume supplémentaire, des moyens obturateurs (16) étant prévus pour commander la communication entre lesdites chambres principale et auxiliaire (4; 7, 17, 27a, 27b), caractérisé en ce qu'à l'intérieur de la chambre principale (4), sont formées plusieurs chambres auxiliaires (27a, 27b) qui communiquent entre elles à travers des ouvertures (12a) commandées par des valves respectives (16) de manière à définir plusieurs volumes supplémentaires qui peuvent être ajoutés à celui de ladite chambre principale (4).

2. Ressort pneumatique à raideur variable selon la revendication 1, caractérisé en ce que les chambres auxiliaires (27a, 27b) sont adjacentes à l'un des fonds d'extrémités (2; 3).

3. Ressort pneumatique à raideur variable selon la revendication 2, caractérisé en ce que les chambres auxiliaires (27a, 27b) sont constituées par des boîtiers rigides (5) reliés à l'un des fonds (3).

4. Ressort penumatique à raideur variable selon une quelconque des revendications précédentes, caractérisé en ce que les moyens obturateurs comprennent au moins une électrovalve (16).

5. Ressort pneumatique à raideur variable selon la revendication 4, caractérisé en ce que l'électrovalve on chaque électrovalve (16) est du type tout ou rien.

6. Ressort pneumatique à raideur variable selon la revendication 4, caractérisé en ce que l'électrovalve ou chaque électrovalve (16) est du type à section de passage variable.

7. Ressort pneumatique à raideur variable selon une quelconque des revendications précédentes, caractérisé en ce que les moyens obturateurs sont commandés en fonction de signaux émis par des moyens (10) servant à capter l'accélération transversale du véhicule.

8. Ressort pneumatique à raideur variable selon une quelconque des revendications précédentes, caractérisé en ce qu'il comprend en outre d'autres moyens obturateurs (38, 29) servant à faire varier automatiquement la section du passage de communication (36b, 36c, 36a) entre une chambre auxiliaire (7) et la chambre principale (4) de telle manière que la section du passage soit automatiquement augmentée lorsque le ressort pneumatique se comprise et qu'elle soit automatiquement réduite lorsque le ressort pneumatique s'allonge.

9. Ressort pneumatique à raideur variable selon la revendication 8, caractérisé en ce que ledit passage de communication comprend un premier trou (36b) qui est ouvert en permance et un deuxième trou (36c) auquel sont associés les moyens obturateurs additionnels (38, 39).

10. Ressort pneumatique à raideur variable selon la revendication 9, caractérisé en ce que le premier trou (36b) possède un plus petit diamètre que le second trou (36c).

11. Ressort pneumatique à raideur variable selon la revendication 9 ou 10, caractérisé en ce que lesdits moyens obturateurs additionnels comprennent un élément mobile de soupape (38) qui peut se déplacer sous l'action d'un ressort (39).

FIG. 1

FIG. 2
(PRIOR ART)

FIG. 3

FIG. 4

FIG. 5